# EUROPÄISCHE PATENTSCHRIFT

(11) **EP 1 145 641 B1**
(45) Veröffentlichungstag und Bekanntmachung des Hinweises auf die Patenterteilung: **21.06.2006**
(21) Anmeldenummer: 01108822.6
(22) Anmeldetag: 09.04.2001
(51) Int. Cl.: A23G 3/20

(54) **Vorrichtung zum Befüllen von Hohlkörpern aus Lebensmitteln**
Device for filling hollow food products
Dispositif de fourrage d'aliments creux

(30) Priorität: 14.04.2000 DE 10018545
(43) Veröffentlichungstag der Anmeldung: 17.10.2001
(73) Patentinhaber: J. Bayer Feinwerk-und Elektrotechnik GmbH & Co., 78087 Mönchweiler (DE)
(72) Erfinder: Häberle, Manfred, 78086 Brigachtal-Klengen (DE); Heiter, Uwe, 78658 Zimmern (DE)
(74) Vertreter: Patentanwälte Westphal, Mussgnug & Partner

(56) Entgegenhaltungen:
- EP-A- 0 221 369
- EP-A- 0 668 021
- DE-U1- 8 235 850
- GB-A- 670 795
- US-A- 3 868 048
- US-A- 4 089 438
- US-A- 5 794 820

## Beschreibung

Die Erfindung betrifft eine Vorrichtung zum Befüllen von Hohlkörpern mit einer Füllmasse mit einem Gehäuse, mit einem Behälter zur Aufnahme der Füllmasse, an dessen Boden mehrere Auslassöffnungen in einer Reihe angeordnet sind, mit mindestens einem Zylinder mit einem Kolben, mit einer Einlassöffnung und einer Auslassöffnung, wobei zum Öffnen und Schließen der Auslassöffnung des Zylinders ein auf Druck öffnendes Auslassventil im Zylinder vorgesehen ist, wobei an der Auslassöffnung des Zylinders eine Spritzdüse angeordnet ist, wobei das aus dem Zylinder ragende Ende des Kolbens an einem mittels einer Antriebsvorrichtung in Richtung der Längsachse der Zylinder bewegbaren Schlitten befestigt ist und wobei unterhalb der Spritzdüsen ein Tisch zur Aufnahme der Hohlkörper vorgesehen ist.

Eine derartige Vorrichtung zum Befüllen von Hohlkörpern, z. B. aus Schokolade oder ähnlichen Süßwarenerzeugnissen mit einer eßbaren Füllmasse, biespielsweise einer Trüffelcreme, ist aus dem deutschen Gebrauchsmuster G 82 35 850.8 U 1 bekannt.

Ein weiteres Beispiel ist aus EP-A-0 221 369 bekannt.

Die bekannte Vorrichtung zeichnet sich zwar durch den Vorteil geringer Abmessungen und eines günstigen Herstellungspreises aus, so dass sie einerseits für Kleinbetriebe geeignet ist, andererseits aber nicht wie in Kleinbetrieben erforderlich, vielseitig einsetzbar ist, weil sich die Reinigung und die Umrüstung auf andere Füllmassen und andere zu befüllende Hohlkörper aufwendig gestalten. Insbesondere erfordert ein Wechsel der Füllmasse mehrere Reinigungs- und Arbeitsschritte.

Es ist daher Aufgabe der Erfindung, eine Vorrichtung zum Befüllen von Hohlkörpern mit einer Füllmasse so zu gestalten, dass sie vielseitig einsetzbar, leicht und schnell auf unterschiedliche Füllmassen und zu befüllende unterschiedliche Hohlkörper umrüstbar, leicht und schnell zu reinigen und trotzdem preisgünstig herstellbar ist.

Die Erfindung löst diese Aufgabe mit den im Anspruch 1 angegeben Merkmalen dadurch, dass der Behälter vom Gehäuse abnehmbar ist, dass an jeder Auslassöffnung des Behälters ein auf Druck schließendes Rückschlagventil zum Öffnen und Schließen der Auslassöffnungen angeordnet ist, das bei abgenommenem Behälter automatisch geschlossen ist, und dass die Einlassöffnung des Zylinders mit dem Ausgang des Rückschlagventils verbunden ist, wobei das Rückschlagventil bei auf das Gehäuse aufgesetztem Behälter geöffnet ist und durch Eindrükken des Kolbens in den Zylinder schließbar ist.

Am Boden des Behälters zur Aufnahme der Füllmasse, der vom Gehäuse der erfindungsgemäßen Vorrichtung abnehmbar ist, sind in einer Reihe mehrere Auslassöffnungen mit je einem Rückschlagventil angeordnet. Bei abgenommenem Behälter schließen die Rückschlagventile selbsttätig, so dass im Behälter noch vorhandene Füllmasse nicht auslaufen kann.

Bei aufgesetztem Behälter stehen die Auslassöffnungen des Behälters mit einer Einlassöffnung je eines Zylinders in Verbindung, in dem ein Kolben geführt ist. Am Zylinderende ist eine Auslassöffnung vorgesehen, die von einem Auslassventil geöffnet und geschlossen wird, das bei Druck öffnet. Beim Aufsetzen des Behälters auf die Zylinder wird das Rückschlagventil geöffnet, so dass Füllmasse aus dem Behälter in den Zylinder fließen kann.

Die Zylinder sind vorzugsweise einzeln zwischen auf einer Leiste angeordnete Zapfen steckbar und wieder entfernbar.

An der Auslassöffnung eines Zylinders ist eine Spritzdüse angeordnet, die vorzugsweise um die Längsachse des Zylinders schwenkbar ist.

Die aus dem Zylinder ragenden Enden der Kolben sind an einem Schlitten befestigbar. Vorzugsweise sind die Enden der Kolben mit einem Tellerrand ausgebildet, der in korrespondierende Ausnehmungen mit einer Hinterschneidung des Schlittens einsteckbar sind.

Der Schlitten ist mit einer Antriebsvorrichtung in Richtung der Längsachse der Zylinder bewegbar, um die in den Zylindern steckenden Kolben zu bewegen. Der Antrieb kann von Hand oder maschinell, z.B. mittels eines Elektromotors, erfolgen.

Beispielsweise sind im Gehäuse eine senkrecht zur Längsachse der Zylinder angeordnete Antriebswelle und eine Umlenkwelle drehbar im Gehäuse gelagert. An den Enden der Antriebswelle sitzt jeweils eine Antriebsrolle, während an den Enden der Umlenkwelle je eine Umlenkrolle sitzt. Auf jeder Seite sind die Antriebsrolle und die Umlenkrolle mittels eines Seiles oder eines Riemens schlupffrei miteinander verbunden. Hierfür eignet sich z.B. ein Drahtseil oder ein Zahnriemen. Das rechte Ende des Schlittens ist am Drahtseil bzw. Zahnriemen auf der rechten Seite und das linke Ende des Schlittens am Drahtseil oder Zahnriemen an der linken Seite befestigt. Durch Vorwärts- und Rückwärtsdrehen der Antriebswelle wird daher der Schlitten vorwärts und rückwärts bewegt, und somit werden die Kolben in den Zylindern hin und her bewegt.

Eine Ausgestaltung der erfindungsgemäßen Vorrichtung sieht vor, an der Antriebswelle einen Hebel mit einem Handgriff und mit einer Ausklinkvorrichtung vorzusehen. Durch Drehen des Hebels von Hand werden die Kolben in den Zylinder gedrückt. Wenn die Kolben am Totpunkt im Zylinder angelangt sind, klinkt der Hebel automatisch aus der Welle aus, die nun mittels einer Rückzugsvorrichtung zurück in die Ausgangslage gedreht wird und dadurch die Kolben bis zu einem vorzugsweise verstellbaren Anschlag aus dem Zylinder gezogen werden.

Eine weitere Ausgestaltung der erfindungsgemäßen Vorrichtung sieht vor, diesen Anschlag einstellbar zu gestalten, so dass der Hub der Kolben einstellbar ist.

Unter den Spritzdüsen ist ein Tisch angeordnet, der vorzugsweise in Schritten in Richtung der Längsachse der Zylinder bewegbar ist. Besonders vorteilhaft ist es, den Vortrieb des Tisches mit dem Antrieb des Schlittens zu koppeln. Es ist weiterhin vorteilhaft, die Höhe des Tisches einstellbar zu gestalten. Der Tisch dient zur Aufnahme der zu befüllenden Hohlkörper, beispielsweise Pralinen. Die zu befüllenden Hohlkörper können auf einer Palette oder auf einem Blister Reihen und Spalten bildend angeordnet sein.

Eine weitere vorteilhafte Ausgestaltung des Tisches sieht eine Hubvorrichtung vor, die beim Befüllen der Hohlkörper mit Füllmasse den Tisch zunächst anhebt und dann so absenkt, dass die Spritzdüsen stets in die Füllmasse in den Hohlkörpern getaucht sind. Durch diese Maßnahme werden Luftblasen in der Füllmasse wirkungsvoll vermieden, die in nachteiliger Weise zu einem zu geringen Gewicht der befüllten Hohlkörper führen und ausserdem eine ideale Brutstätte für die Ware schnell verderben lassende Keime darstellen. Vorzugsweise ist die Hubvorrichtung des Tisches mit dem Antrieb des Schlittens gekoppelt.

Anhand der Figuren werden ein Ausführungsbeispiel der erfindungsgemäßen Vorrichtung sowie Einzelheiten des Ausführungsbeispieles beschrieben und erläutert.

In der Zeichnung zeigen:
- Figur 1: ein Ausführungsbeispiel einer erfindungsgemäßen Vorrichtung mit aufgesetztem Behälter in Frontansicht,
- Figur 2: das Ausführungsbeispiel ohne Behälter in Draufsicht,
- Figur 3: die rechte Seitenansicht des Ausführungsbeispieles mit aufgesetztem Behälter,
- Figur 4: die linke Seitenansicht des Ausführungsbeispiel mit aufgesetztem Behälter und der Rückzugsvorrichtung,
- Figur 5: die linke Seitenansicht des Ausführungsbeispieles ohne Behälter, jedoch mit dem verstellbaren Anschlag,
- Figur 6: die Ausklinkvorrichtung im eingerasteten Zustand,
- Figur 7: die Ausklinkvorrichtung während des Ausklinkvorgangs,
- Figur 8: die Ausklinkvorrichtung im ausgerasteten Zustand,
- Figur 9: ein Zylinderende mit einer Einlass- und Auslassöffnung, mit einem Kolben, mit einem Auslassventil und einer Spritzdüse sowie eine Auslassöffnung mit einem Rückschlagventil des Behälters getrennt vom Zylinder im Längsschnitt,
- Figur 10: das Zylinderende mit der Einlass- und Auslassöffnung, mit dem Kolben, mit dem Auslassventil und der Spritzdüse sowie mit der auf die Einlassöffnung des Zylinders aufgesteckten Auslassöffnung mit dem Rückschlagventil des Behälters im Längsschnitt, beim Ansaugen der Füllmasse aus dem Behälter und
- Figur 11: das Zylinderende mit der Einlass- und der Auslassöffnung, mit dem Kolben, mit dem Auslassventil und der Spritzdüse sowie mit der auf die Einlassöffnung des Zylinders aufgesteckten Auslassöffnung mit dem Rückschlagventil des Behälters im Längsschnitt beim Auspressen der Füllmasse aus dem Zylinder.

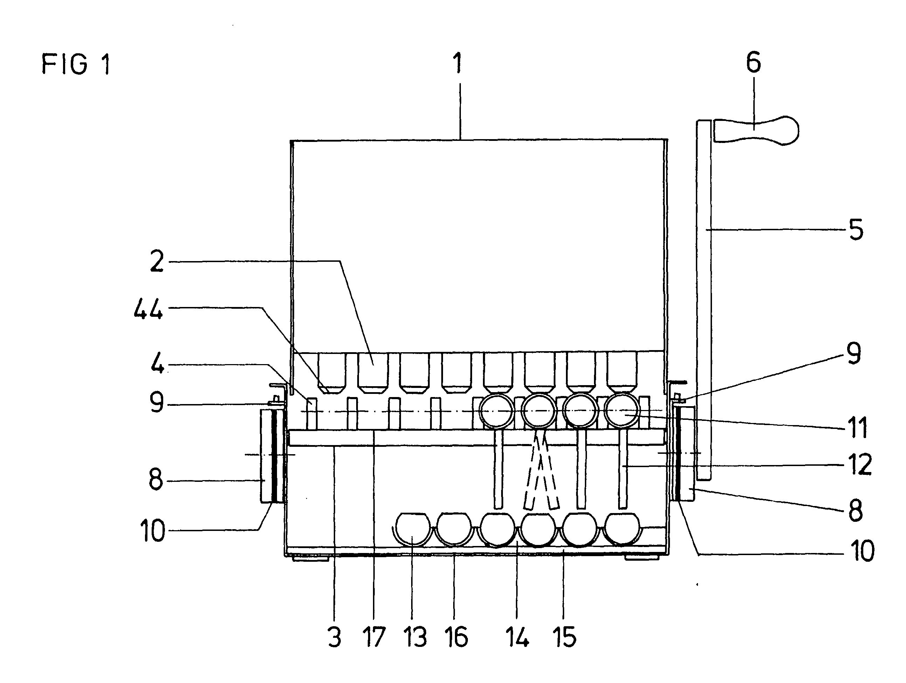

In der Figur 1 ist ein Ausführungsbeispiel der erfindungsgemäßen Vorrichtung in Frontansicht gezeigt.

Am Boden eines Behälters 1, in welchem sich die Füllmasse befindet, sind mehrere Auslassöffnungen 2 in Reihe angeordnet. Unterhalb der Auslassöffnungen 2 verläuft eine an einem Gehäuse 16 befestigte Leiste 3, auf der senkrecht stehend mehrere Zapfen 4 angeordnet sind. Zwischen den Zapfen 4 stecken Zylinder 11 genau unter den Auslassöffnungen 2 des Behälters 1, wobei eine Auslassöffnung 2 mit einer oberen Einlassöffnung eines Zylinders 11 verbunden ist. Der Übersichtlichkeit wegen sind in der Figur 1 nur vier Zylinder gezeigt. Weil die Zylinder 11 einzeln zwischen die Zapfen 4 steckbar und auch wieder entfernbar sind, können die Anzahl und auch die Verteilung der Zylinder 11 auf der Leiste 4 frei gewählt werden. Am Zylinderende ist eine untere Auslassöffnung mit einer vorzugsweise schwenkbaren Spritzdüse 12 angeordnet. Unterhalb der Spritzdüsen 12 befindet sich im Gehäuse 16 ein Tisch 15, auf dem eine Palette oder ein Blister 14 mit den zu füllenden Hohlkörpern 13 sitzt. Vorzugsweise ist der Tisch 15 in Längsrichtung mittels einer Antriebsvorrichtung bewegbar, um eine neue noch zu befüllende Reihe von Hohlkörpern 13 unter den Spritzdüsen 12 zu positionieren. Um Hohlkörper unterschiedlicher Größe mit Füllmasse füllen zu können, ist es vorteilhaft, den Tisch 15 in der Höhe verstellbar zu gestalten.

Es ist weiter vorteilhaft, für den Tisch eine Hubvorrichtung vorzusehen, die beim Befüllen der Hohlkörper mit Füllmasse den Tisch zunächst anhebt und dann so absenkt, dass die Spritzdüsen stets in die Füllmasse in den Hohlkörper eingetaucht sind. Durch diese Maßnahme werden Luftblasen in der Füllmasse vermieden, die, wie bereits erwähnt wurde, in nachteiliger Weise zu einem zu geringen Gewicht der befüllten Hohlkörper führen und ausserdem einen idealen Nährboden für Keime darstellen, welche die Ware schnell verderben lassen. Vorzugsweise ist die Hubvorrichtung des Tisches mit dem Antrieb des Schlittens gekoppelt.

Durch Schwenken der Spritzdüsen 12 lässt sich die erfindungsgemäße Vorrichtung an Blister oder Paletten mit unterschiedlichen Spaltenabständen optimal anpassen.

Durch geeignetes Schwenken der Spritzdüsen 12 lässt sich die erfindungsgemäße Vorrichtung auch an Hohlkörper unterschiedlicher Form anpassen. So können beispielsweise größere Hohlkörper, wie z.B. Ostereier aus Schokolade, mittels jeweils zweier gegeneinander geschwenkter benachbarter Spritzdüsen 12 mit Füllmasse gefüllt werden, wie in Figur 1 angedeutet ist.

In jeder Auslassöffnung 2 des Behälters 1 befindet sich ein in der Figur 1 nicht sichtbares Rückschlagventil, das bei abgenommenem Behälter und bei fehlendem Zylinder unter der Auslassöffnung selbsttätig schließt, so dass aus diesen Auslassöffnungen keine Füllmasse treten kann.

Im Gehäuse 16 ist eine parallel zur Leiste 3 angeordnete Antriebswelle drehbar gelagert, hinter der ebenfalls hierzu parallel verlaufend eine Umlenkwelle drehbar gelagert ist. Am rechten und am linken Ende der Antriebswelle ist je eine Antriebsrolle 7 befestigt, während auf dem rechten und auf dem linken Ende der Umlenkwelle je eine Umlenkrolle 8 sitzt. Auf jeder Seite ist ein Drahtseil 10 oder ein Zahnriemen über die Antriebsrolle 7 und die Umlenkrolle 8 geführt, so dass die beiden Wellen - die Antriebswelle und die Umlenkwelle - schlupffrei miteinander verbunden sind. Das rechte und das linke Ende 9 eines parallel zur Leiste 3 verlaufenden Schlittens 19 ist rechts und links am Drahtseil 10 befestigt, das rechts und links jeweils über die Antriebsrolle 7 und die Umlenkrolle 8 läuft, so dass die beiden Wellen schlupffrei miteinander verbunden sind. Von dem Schlitten sind nur das rechte und das linke Ende 9 in der Figur 1 sichtbar. Zum Drehen der beiden Wellen ist an der Antriebswelle ein Hebel 5 mit einem Handgriff 6 befestigt.

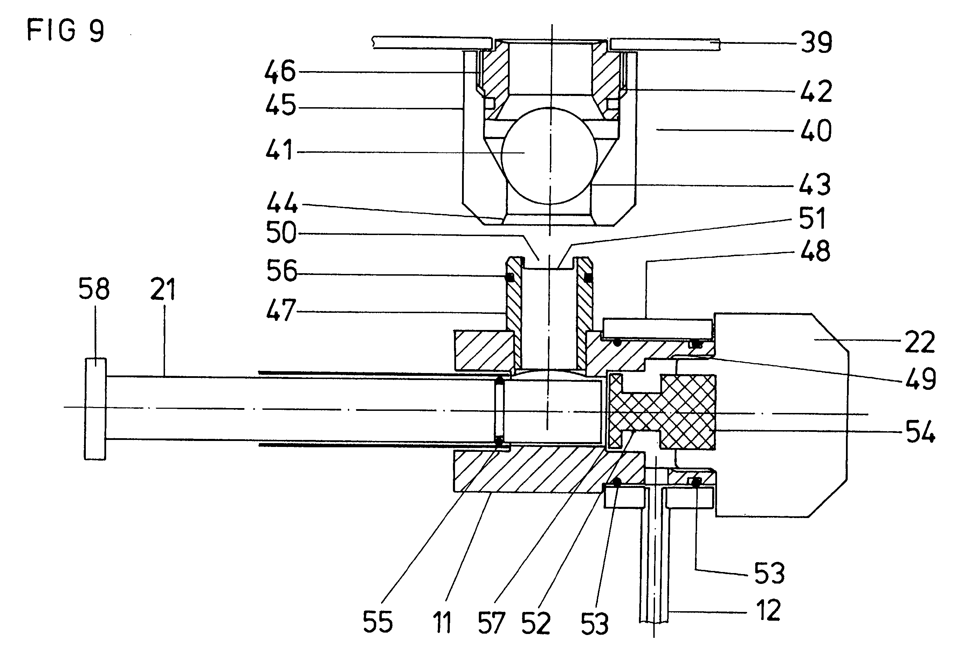

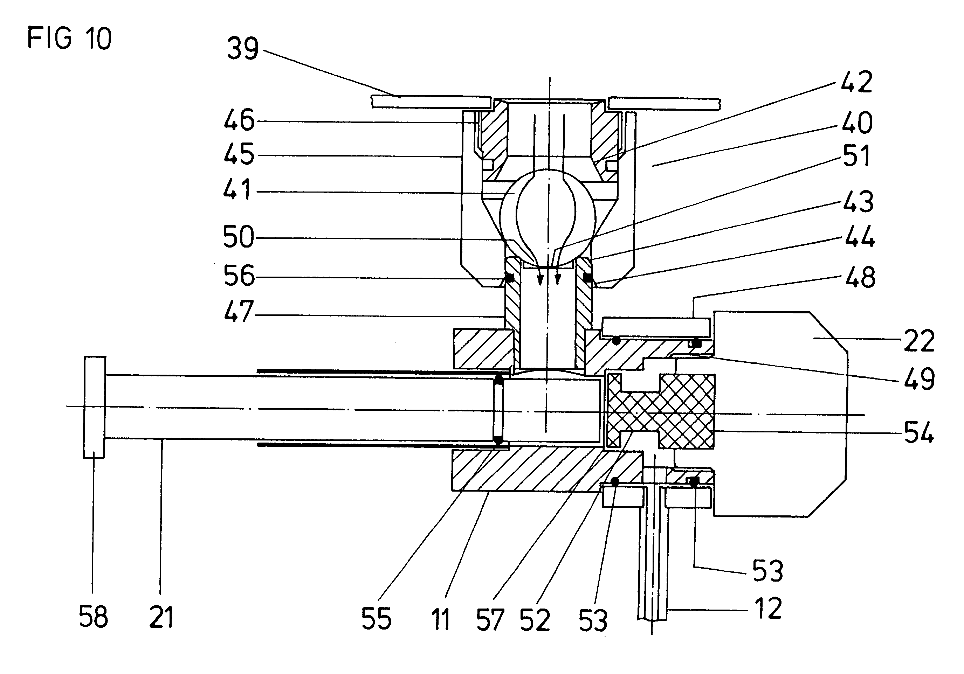

Durch Herunterdrücken dieses Hebels 5 wird die Antriebswelle gedreht, so dass das Drahtseil 10 bewegt wird, das den Schlitten, an dem die Enden der in den Zylindern steckenden Kolben befestigt sind, nach vorne zieht. Durch diese Bewegung, die beispielsweise von Hand, aber auch maschinell ausgeführt werden kann, werden die Kolben in die Zylinder 11 gedrückt, wodurch Füllmasse aus den Spritzdüsen 12 gedrückt wird. Dieser Vorgang wird an späterer Stelle anhand besser geeigneter Figuren - die Figuren 9 und 10 - eingehend erläutert.

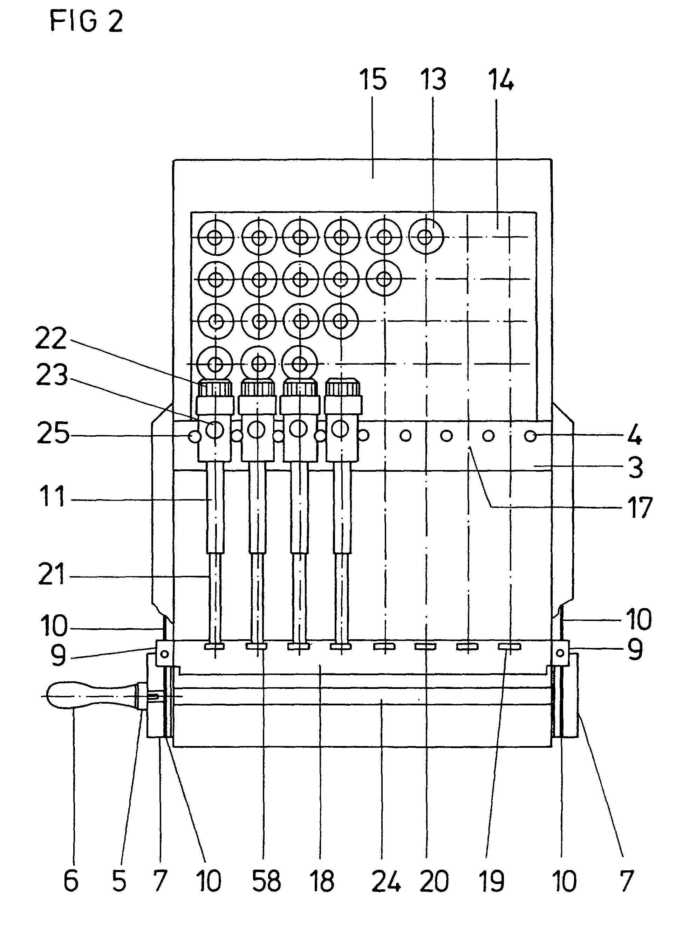

In der Figur 2 ist das Ausführungsbeispiel in Draufsicht ohne den Behälter 1 zu sehen.

Auf dem Tisch 15 liegt der Blister 14 mit den zu befüllenden Hohlkörpern 13. Die Zylinder 11, die an ihrem vorderen Ende mit einer Kappe 22 verschlossen sind, liegen auf der Leiste 3 zwischen jeweils zwei Zapfen 4 gesteckt auf. Rechts und links ist an den Zylindern 11 eine Aussparung 25 für die Zapfen 4 eingearbeitet, so dass die Zylinder 11 fest fixiert sind. Aus dem hinteren Ende der Zylinder 11 ragen Kolben 21, deren Ende 58 tellerförmig ausgebildet ist. Die Enden 58 der Kolben 21 stecken in korrespondierenden Ausnehmungen 19 mit einer Hinterschneidung 20 des Schlittens 18.

Ein wesentlicher Vorteil liegt nun darin, dass jeder Zylinder 11 zwischen zwei Zapfen 4 auf die Leiste 3 und das tellerförmige Ende 58 des Kolbens 21 in die korrespondierende Ausnehmung 19 mit der Hinterschneidung 20 des Schlittens 18 einsteckbar sind. Dadurch lassen sich die Zylinder mit den Kolben leicht in die Vorrichtung einsetzen und auch wieder entnehmen. Wie bereits erwähnt lassen sich die Anzahl der Zylinder und deren Verteilung auf der Leiste beliebig wählen.

Im hinteren Teil des Gehäuses 16 ist die Antriebswelle 24 drehbar gelagert, an deren Enden je eine Antriebsrolle 7 zur Führung des Drahtseiles 10 befestigt ist. Auf dem von vorne gesehen rechten Ende der Antriebswelle 24 ist der Hebel 5 mit dem Handgriff 6 befestigt. Die Schlittenenden 9 des Schlittens 18, in dessen Ausnehmungen 19 die Enden 58 der Kolben 21 sitzen, sind am rechten und am linken Drahtseil 10 befestigt. Durch Drehen des Hebels 5 nach vorn wird die Antriebswelle 24 gedreht, so dass links und rechts das Drahtseil 10 bewegt wird, das den Schlitten 18 nach vorn schiebt. Durch die Bewegung des Schlittens 18 nach vorn werden die Kolben 21 in die Zylinder 11 gedrückt, wodurch die Füllmasse aus den Zylindern 11 in die zu befüllenden Hohlkörper 13 gedrückt wird.

Mittels einer Ausklinkvorrichtung wird der Hebel 5 an einem einstellbaren Punkt aus der Antriebswelle 24 ausgeklinkt, die mittels einer Rückzugsvorrichtung in die Ausgangslage gedreht wird.

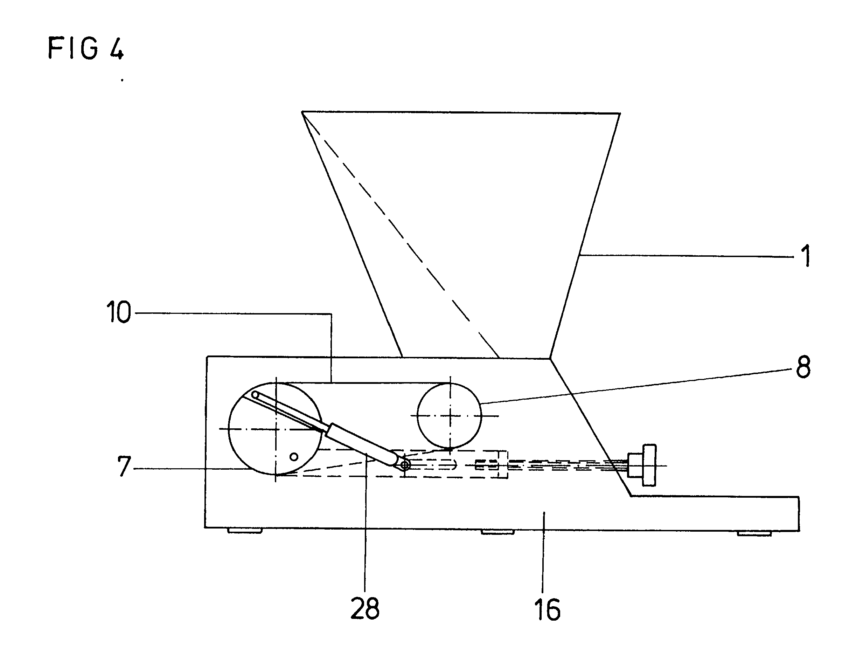

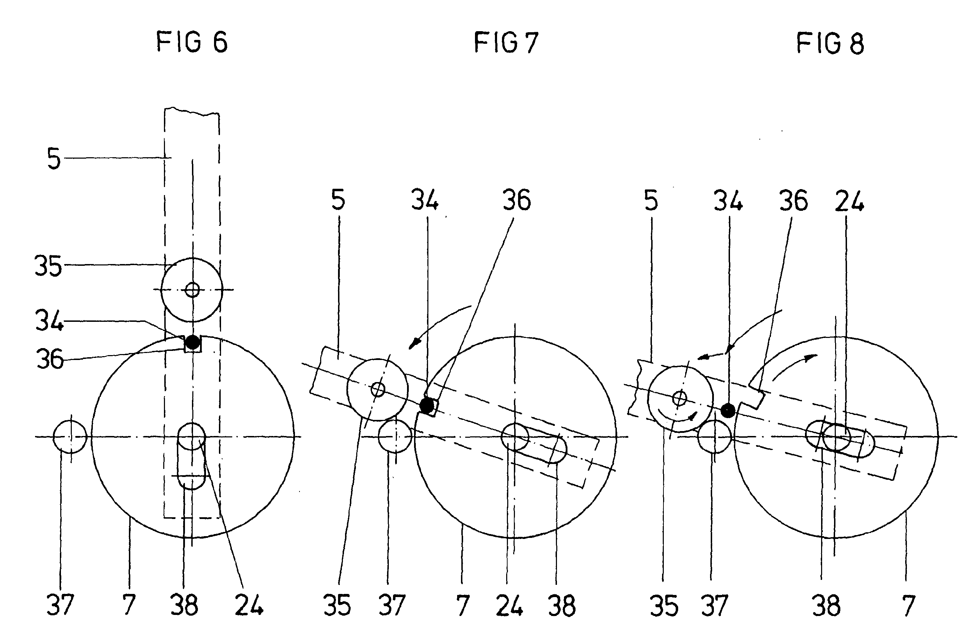

Der Aufbau und die Funktion der Rückzugsvorrichtung werden anhand der Figur 4 erklärt, während der Aufbau und die Funktion der Ausklinkvorrichtung anhand der Figuren 6, 7 und 8 erläutert wird.

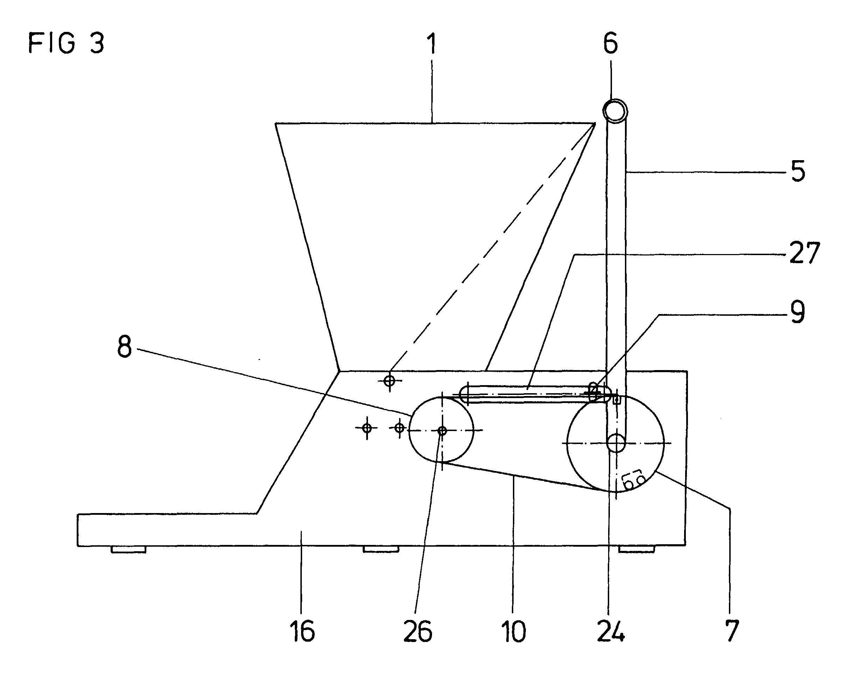

In der Figur 3 ist die rechte Seite des Ausführungsbeispieles gezeigt. Der Behälter 1 mit der Füllmasse ist auf das Gehäuse 16 aufgesetzt. Im hinteren Teil des Gehäuses 16 ist die Antriebswelle 24 drehbar gelagert, an der die beiden Antriebsrollen 7 sowie der Hebel 5 mit dem Handgriff 6 befestigt sind. Vor der Antriebswelle 24 ist die Umlenkwelle 26 drehbar im Gehäuse 16 gelagert. Auf dem Ende der Umlenkwelle 26 sitzt eine Umlenkrolle 8. Das Drahtseil 10, an welchem das rechte Schlittenende 9 des Schlittens 18 befestigt ist, ist über die Antriebsrolle 7 und die Umlenkrolle 8 geführt. Zur Führung des aus dem Gehäuse 16 ragenden Schlittenendes 9 ist ein Schlitz 27 in das Gehäuse 16 eingearbeitet.

In der Figur 4 ist die linke Seite des Ausführungsbeispieles mit der Rückzugsvorrichtung dargestellt.

Der zur Aufnahme der Füllmasse vorgesehene Behälter 1 sitzt auf dem Gehäuse 16. Im hinteren Teil des Gehäuses 16 ist die Antriebswelle 24 mit einer auf ihrem linken Ende sitzenden Antriebsrolle 7 drehbar gelagert. Die Umlenkwelle 26 ist im Gehäuse 16 vor der Antriebswelle 24 drehbar gelagert. Auf dem linken Ende der Umlenkwelle 26 sitzt eine Umlenkrolle 8. Die Antriebsrolle 7 und die Umlenkrolle 8 sind mit dem Drahtseil 10 umspannt. An der auf der Antriebswelle 24 sitzenden Antriebsrolle 7 ist das eine Ende und am Gehäuse 16 das andere Ende der Rückzugsvorrichtung 28 befestigt, für die eine Rückzugsfeder oder eine Rückzugsfeder kombiniert mit einem Dämpfungsglied vorgesehen sein kann. Besonders geeignet ist eine Gasdruckfeder, die eine vorteilhafte Kombination aus einer Feder und einem Dämpfungsglied darstellt.

Aus Gründen der Übersichtlichkeit ist in der Figur 4 nur die Rückzugsvorrichtung 28 gezeichnet.

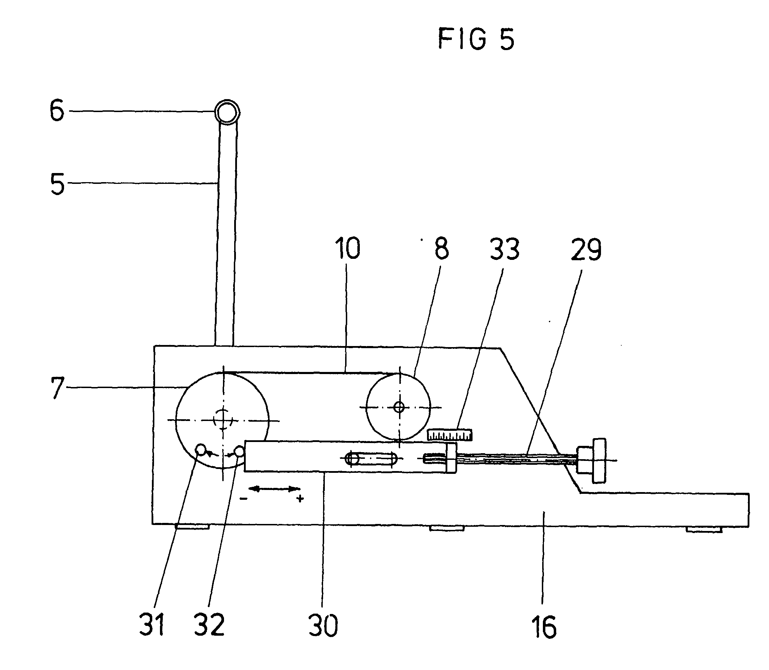

In der Figur 5 ist ebenfalls die linke Seite des Ausführungsbeispieles abgebildet. Aus Gründen der Übersichtlichkeit ist in der Figur 5 die Rückzugsvorrichtung 28 nicht gezeigt, sondern nur die in der Figur 4 nicht gezeigte Anschlagsvorrichtung.

Am Gehäuse 16 ist auf der linken Seite ein mittels einer Stellschraube 29 verstellbarer Anschlag 30 vorgesehen, zu dessen definierter Einstellung eine Skala 33 am Gehäuse 16 angebracht ist. Auf der auf dem linken Ende der Antriebswelle sitzenden Antriebsrolle 7 sind ein erster Anschlagstift 31 und ein zweiter Anschlagstift 32 angeordnet. Der zweite Anschlagstift 32 ist ein- und aussteckbar. Bei eingestecktem zweitem Anschlagstift 32 dreht sich die Antriebsrolle 7 nach dem Ausklinken zurück, bis der erste Anschlagstift 31 am Anschlag 30 anschlägt. Wenn der zweite Anschlagstift 32 ausgesteckt ist, dreht sich die Antriebsrolle 7 nach dem Ausklinken zurück, bis der zweite Anschlagstift 32 am Anschlag 30 anschlägt. Bei ausgestecktem zweiten Anschlagstift 32 ist die Rückdrehung geringer als bei eingestecktem zweiten Anschlagstift.

Mit dem ersten und dem zweiten Anschlagstift wird der Kolbenhub grob eingestellt, während die Feineinstellung mittels der Stellschraube 29 erfolgt.

In der Figur 6 sind der Hebel 5, die Antriebsrolle 7 und die Ausklinkvorrichtung im eingerasteten Zustand dargestellt.

Die Antriebswelle 24 sitzt in einem Längsloch 38 des Hebels 5, an dem ein Mitnehmerzapfen 34 und eine Führungsrolle 35 angeordnet sind. Bei senkrechter Stellung des Hebels 5 im eingerasteten Zustand ist der Mitnehmerzapfen 34 in eine Nut 36 der Antriebsrolle 7 eingerastet. Neben dem Umfang der Antriebsrolle 7 ist ein Führungsteil 37 am Gehäuse befestigt.

In der Figur 7 ist der Ausrastvorgang gezeigt.

Der Hebel 5 wird nach vorn gedrückt und dreht wegen des in die Nut 36 der Antriebsrolle 7 eingerasteten Mitnehmerzapfens 34 die Antriebsrolle 7. Sobald die Führungsrolle 35 des Hebels 5 an das Führungsteil 37 am Gehäuse gelangt, gleitet die Führungsrolle 35 an dem Führungsteil 37 empor, so dass der Hebel 5 angehoben wird, wodurch der Mitnehmerzapfen 34 aus der Nut 36 gleitet. Sobald der Mitnehmerzapfen 34 die Antriebsrolle 7 freigibt, wird sie von der Rückzugsvorrichtung zurück bis zum Anschlag gedreht. Der ausgeklinkte Zustand ist in der Figur 8 gezeigt.

In der Figur 9 sind eine Auslassöffnung mit einem Rückschlagventil des Behälters sowie darunter ein Zylinder im Längsschnitt gezeigt. Der Behälter ist vom Zylinder abgenommen.

Im Boden 39 des Behälters ist in einer Öffnung ein oberer Ventilsitz 42 befestigt, an dem, z.B. mittels eines Gewindes 46, ein Ventilrohr 45 mit einem unteren Ventilsitz 43 befestigt ist. Zwischen dem oberen Ventilsitz 42 und dem unteren Ventilsitz 43 befindet sich eine Kugel 41, die infolge der Schwerkraft und der sich im Behälter befindenden Füllmasse dicht auf dem unteren Ventilsitz 43 aufliegt, so dass keine Füllmasse aus dem Behälter auslaufen kann. Die beiden Ventilsitze 42 und 43 sowie die Kugel 41 bilden das Rückschlagventil.

Unterhalb des Rückschlagventils ist in der Figur 9 passgenau der Zylinder 11 mit dem Kolben 21 im Längsschnitt dargestellt.

In einer Einlassöffnung des Zylinders 11 sitzt ein Verbindungsrohr 47 mit einem Kugelsitz 50 für die Kugel 41, das von einem Dichtring 56 zur Abdichtung umfasst ist. Am Kugelsitz 50 ist eine Überbrückung 51 vorgesehen, so dass die Kugel 41 das Verbindungsrohr 47 nicht vollständig verschließt. Auf das Zylinderende ist eine Hülse 48 mit der Spritzdüse 12 aufgesteckt. Die Hülse 48 ist auf zwei vorgespannten O-Ringen 53 gelagert, damit die Spritzdüse 12 schwenkbar ist. Das Zylinderende ist mit einer Kappe 22 verschlossen, die mittels eines Gewindes 49 mit dem Zylinder 11 verschraubt ist. Zwischen dem Ende des Zylinders 11 und dem Verbindungsrohr 47 ist im Zylinder 11 ein Anschlag 57 für einen Gummikolben 54 eingearbeitet, der zwischen diesem Anschlag 57 und der Kappe 22 angeordnet ist. Im drucklosen Zustand des Zylinders 11 drückt die eine Stirnseite des Gummikolbens 54 gegen den Anschlag 57, während die andere Stirnseite gegen die Kappe 22 drückt. Der Anschlag 57, der Gummikolben 54 und die Kappe 22 bilden das Auslassventil 52 des Zylinders 11.

In der Figur 10 ist das Ventilrohr 45 auf das Verbindungsrohr 47 aufgesetzt, wie es bei aufgesetzem Behälter der Fall ist. Die Kugel 41 wird vom Kugelsitz 50 angehoben, jedoch nicht gegen den oberen Ventilsitz 42 gedrückt. Es kann deshalb Füllmasse aus dem Behälter um die Kugel 41 herum - wie durch die Pfeile angedeutet ist - in das Verbindungsrohr 47 und von da weiter in den Zylinder 11 fließen. Durch Zurückziehen des Kolbens 21 wird infolge der Sogwirkung Füllmasse in den Zylinder 11 gesaugt. Weil die eine Stirnseite des Gummikolbens 54 gegen den Anschlag 57 drückt, ist das Auslassventil 52 des Zylinders 11 geschlossen, so dass keine Füllmasse aus der Spritzdüse 12 austreten kann.

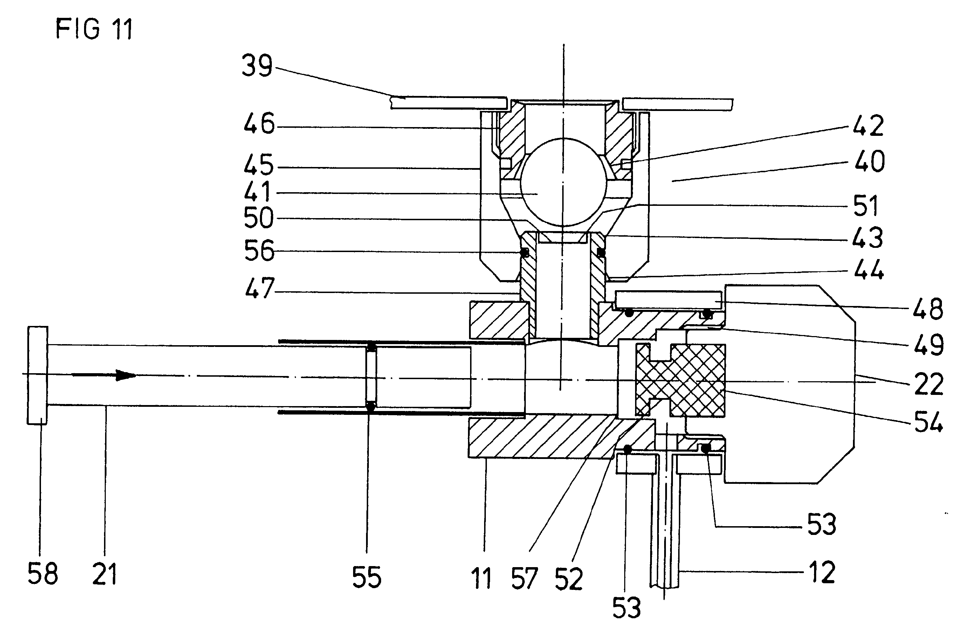

In der Figur 11 ist dargestellt, wie die Füllmasse aus dem Zylinder gepresst wird.

Hierzu wird der Kolben durch Drehen des Hebels mittels des Schlittens in den Zylinder gedrückt, wo ein Druck entsteht, der die Kugel 41 gegen den oberen Ventilsitz 42 drückt, so dass der Behälter gegen den Zylinder abgedichtet ist. Es kann daher weder Füllmasse vom Behälter in den Zylinder fließen noch vom Zylinder zurück in den Behälter strömen. Gleichzeitig wird von der unter Druck stehenden Füllmasse der Gummikolben 54 gegen die Kappe 22 gedrückt, so dass die Füllmasse aus dem Zylinder in die Spritzdüse 12 fließt, an deren Ende die Füllmasse austritt und in die zu befüllenden Hohlkörper fließt. Am Ende des Füllvorganges wird der Kolben 21 schlagartig zurückgezogen, wenn der Mitnehmerzapfen 34 des Hebels 5 aus der Nut 36 der Antriebsrolle 7 rastet, weil nun die Gasdruckfeder 28 die Antriebswelle 24 und somit das Antriebsrad 7 zurückdreht. Weil nun im Zylinder ein Sog entsteht, fällt die Kugel 41 auf den Kugelsitz 50, damit neue Füllmasse in den Zylinder strömen kann. Gleichzeitig dehnt sich der Gummikolben 54 wieder aus und verschließt am Anschlag 57 den Zylinder. Durch das Ausdehnen des Gummikolbens 54 entsteht in der Spritzdüse 12 ein Sog, der ein sauberes Abreissen des Füllmassenstromes am Ende der Auslaufdüse 12 bewirkt. Auf diese Weise wird ein Nachtropfen der Füllmasse wirkungsvoll verhindert.

Die lichte Weite des Zylinders nimmt von aussen nach innen hin ab. Es sind keine Hinterschneidungen vorhanden. Aus diesen Gründen lässt sich der Zylinder leicht und gründlich bei abgenommener Kappe 22 reinigen.

Im Behälter 1 können Trennwände zwischen den Auslassöffnungen 2 vorgesehen sein. Diese Tennwände ermöglichen es, den Behälter mit unterschiedlichen Füllmassen zu füllen, um in einem Arbeitsgang Hohlkörper mit unterschiedlichen Füllmassen zu befüllen. Durch Schwenken zweier benachbarter Spritzdüsen gegeneinander, können Hohlkörper in einem Arbeitsgang sogar mit zwei verschiedenen Füllmassen befüllt werden.

Wie bereits erwähnt, ist die erfindungsgemäße Vorrichtung zum Befüllen von eßbaren Hohlkörpern, wie z. B. Pralinen, Schokoladeneier und dergleichen, mit einer eßbaren Füllmasse geeignet, deren Viskosität breiig, cremig, zähflüssig oder auch leichtflüssig sein kann. Als eine Auswahl an Beispielen für die Füllmasse seien Marzipan, Creme, Honig, Likör, Schnaps oder Fruchtsaft genannt.

Die Erfindung ist jedoch keineswegs auf das Befüllen eßbarer Hohlkörper mit einer eßbaren Füllmasse beschränkt. Beispielsweise kann mittels der erfindungsgemäßen Vorrichtung eine eßbare Füllmasse auch in nicht eßbare Hohlkörper gefüllt werden.

Auch eine Anwendung der Erfindung im kosmetischen Bereich ist denkbar. So kann z.B. eine kosmetische Creme, Paste, Milch, Flüssigkeit, Parfüm, Öl, Lotion oder ähnliches dosiert in die Hohlkörper gefüllt werden. Die Erfindung ist allgemein zum Füllen von Hohlkörpern mit einer Füllmasse geeignet.

Zusammenfassend sind die wesentlichen Vorteile der erfindungsgemäßen Vorrichtung zum Befüllen von Hohlkörpern aufgezählt.

Der Behälter der Vorrichtung kann jederzeit abgenommen werden, um die Füllmasse z.B. in einem Kühlschrank zu kühlen oder in einem Wärmeschrank zu erwärmen oder um einen anderen Behälter mit einer anderen Füllmasse aufzusetzen. Alle die Füllmasse aufnehmenden und leitenden Teile der Vorrichtung - der Behälter, die Zylinder, die Kolben und die Spritzdüsen - sind ohne Werkzeuge voneinander trennbar. Ausserdem sind diese Teile so gestaltet - keine Hinterschneidungen im Zylinder - , dass sie leicht zu reinigen sind. Wegen der schlagartigen Umkehr der Bewegungsrichtung der Kolben am Ende des Füllvorganges und wegen des elastischen Gummikolbens wird ein sauberes Abreissen des Füllmassenstromes am Ende der Spritzdüsen erzielt. Auf diese Weise wird unerwünschtes Nachtropfen der Füllmasse wirkungsvoll verhindert. Mittels einer Heizvorrichtung, z.B. einer Heizfolie, an den Zylindern lässt sich die Temperatur der Füllmasse auf einen konstanten Wert regeln. Dadurch lässt sich die Viskosität der Füllmasse auf den optimalen Wert regeln. Mittels der an der Antriebswelle bzw. an eine Antriebsrolle und am Gehäuse angeordneten Anschlagvorrichtung mit einer Skala lässt sich der Kolbenhub genau einstellen. Durch diese Maßnahme lässt sich die Füllmenge genau dosieren. Weil die Zylinder einzeln abnehmbar sind, lässt sich die erfindungsgemäße Vorrichtung mit nur wenigen Handgriffen an Hohlkörper unterschiedlicher Größe anpassen. Weil die Spritzdüsen schwenkbar sind, ist eine optimale Anpassung beim Befüllen der Hohlkörper an Blister oder Paletten mit unterschiedlichen Spaltenabständen möglich. Es kann ein Hohlkörper mittels zweier Spritzdüsen befüllt werden. Wegen der Trennwände im Behälter können in einem Arbeitsgang Hohlkörper mit unterschiedlichen Füllmassen befüllt werden. Wegen der schwenkbaren Spritzdüsen kann ein Hohlkörper auch mit zwei unterschiedlichen Füllmassen befüllt werden. Durch Anheben des Tisches beim Füllvorgang werden Luftblasen in der Füllmasse vermieden.

Die erfindungsgemäße Vorrichtung kann sehr leicht von angelerntem Personal bedient werden. Ausserdem ist sie ergonomisch so gestaltet, dass ein nahezu ermüdungsfreies Arbeiten erzielt wird. Anstelle des Antriebes von Hand kann ein maschineller Antrieb, z.B. ein Elektromotor, ein Hydraulik- oder ein Pneumatikzylinder vorgesehen sein.

Trotz der zahlreichen Vorteile zeichnet sich die erfindungsgemäße Vorrichtung durch geringe Herstellungskosten aus, so dass sie besonders gut für Kleinbetriebe geeignet ist.

### Bezugszeichenliste

- 1: Behälter
- 2: Auslassöffnung
- 3: Leiste
- 4: Zapfen
- 5: Hebel
- 6: Handgriff
- 7: Antriebsrolle
- 8: Umlenkrolle
- 9: Schlittenende
- 10: Drahtseil
- 11: Zylinder
- 12: Spritzdüse
- 13: Hohlkörper
- 14: Blister
- 15: Tisch
- 16: Gehäuse
- 17: Heizfolie
- 18: Schlitten
- 19: Ausnehmung
- 20: Hinterschneidung
- 21: Kolben
- 22: Kappe
- 23: Einlassöffnung
- 24: Antriebswelle
- 25: Aussparung
- 26: Umlenkwelle
- 27: Schlitz
- 28: Gasdruckfeder
- 29: Stellschraube
- 30: Anschlag
- 31: 1. Anschlagstift
- 32: 2. Anschlagstift
- 33: Skala
- 34: Mitnehmerzapfen
- 35: Führungsrolle
- 36: Nut
- 37: Führungsteil
- 38: Längsloch
- 39: Boden des Behälters
- 40: Rückschlagventil
- 41: Kugel
- 42: oberer Ventilsitz
- 43: unterer Ventilsitz
- 44: Auslassöffnung
- 45: Ventilrohr
- 46: Gewinde
- 47: Verbindungsrohr
- 48: Hülse
- 49: Gewinde
- 50: Kugelsitz
- 51: Überbrückung
- 52: Auslassventil
- 53: O-Ring
- 54: Gummikolben
- 55: Dichtring
- 56: Dichtring
- 57: Anschlag

## Patentansprüche

1. Vorrichtung zum Befüllen von Hohlkörpern (13) mit einer Füllmasse mit einem Gehäuse (16) mit einem Behälter (1) zur Aufnahme der Füllmasse, an dessen Boden (39) mehrere Auslassöffnungen (2) in einer Reihe angeordnet sind, mit mindestens einem Zylinder (11) mit einem Kolben (21), mit einer Einlassöffnung (23) und einer Auslassöffnung, wobei zum Öffnen und Schließen der Auslassöffnung des Zylinders (11) ein auf Druck öffnendes Auslassventil (52) im Zylinder (11) vorgesehen ist, wobei an der Auslassöffnung des Zylinders (11) eine Spritzdüse (12) angeordnet ist, wobei das aus dem Zylinder (11) ragende Ende des Kolbens (21) an einem mittels einer Antriebsvorrichtung in Richtung der Längsachse der Zylinder (11) bewegbaren Schlitten (18) befestigt ist und wobei unterhalb der Spritzdüsen (12) ein Tisch (15) zur Aufnahme der Hohlkörper (13) vorgesehen ist,
**dadurch gekennzeichnet, daß** der Behälter (1) vom Gehäuse (16) abnehmbar ist, daß an jeder Auslassöffnung (2) des Behälters (1) ein auf Druck schließendes Rückschlagventil (40) zum Öffnen und Schließen der Auslassöffnungen (2) angeordnet ist, das bei abgenommenem Behälter (19) automatisch geschlossen ist, und daß die Einlassöffnung (23) des Zylinders (11) mit dem Ausgang des Rückschlagventils (40) verbunden ist, wobei das Rückschlagventil (40) bei auf das Gehäuse (16) aufgesetztem Behälter (1) geöffnet ist und durch Eindrücken des Kolbens (21) in den Zylinder (11) schließbar ist.

2. Vorrichtung nach Anspruch 1,
**dadurch gekennzeichnet, dass** parallel zum Schlitten (18) eine Antriebswelle (24) und eine Umlenkwelle (26) drehbar im Gehäuse (16) gelagert sind, dass auf den Enden der Antriebswelle (24) je eine Antriebsrolle (7) sitzt, dass auf den Enden der Umlenkwelle (26) je eine Umlenkrolle (8) sitzt, dass auf jeder Seite des Gehäuses (16) ein Seil (10) oder ein Riemen über die Antriebsrolle (7) und die Umlenkrolle (8) geführt ist, dass das rechte Ende (9) des Schlittens (18) am Seil (10) oder Riemen auf der rechten Seite und dass das linke Ende (8) des Schlittens (18) am Seil (10) oder Riemen auf der linken Seite des Gehäuses (16) befestigt ist und dass zum Antreiben der Antriebswelle (24) eine Antriebsvorrichtung vorgesehen ist.

3. Vorrichtung nach Anspruch 1 oder 2,
**dadurch gekennzeichnet, dass** die Spritzdüse (12) mittels einer auf dem Zylinder (11) steckenden Hülse (48) drehbar befestigt ist.

4. Vorrichtung nach Anspruch 3,
**dadurch gekennzeichnet, dass** die Hülse (48) auf zwei vorgespannten O-Ringen (53) gelagert ist, um eine Friktion zu erzeugen und um sie ohne Werkzeug lösen und verstellen zu können.

5. Vorrichtung nach Anspruch 1, 2, 3 oder 4,
**dadurch gekennzeichnet, dass** das Zylinderende mit einer abnehmbaren Kappe (22) verschlossen ist.

6. Vorrichtung nach Anspruch 5,
**dadurch gekennzeichnet, dass** die Kappe (22) ein Aussengewinde aufweist, das mit einem Innengewinde (49) des Zylinders (11) verschraubt ist.

7. Vorrichtung nach einem der vorangehenden Ansprüche,
**dadurch gekennzeichnet, dass** die lichte Weite des Zylinders (11) vom mit der Kappe (22) verschlossenen Ende nach hinten abnimmt, um Hinterschneidungen zu vermeiden.

8. Vorrichtung nach einem der vorangehenden Ansprüche,
**dadurch gekennzeichnet, dass** das Auslassventil (52) als elastisches Ventil (54) aus einem elastischen Werkstoff hergestellt ist.

9. Vorrichtung nach einem der vorangehenden Ansprüche,
**dadurch gekennzeichnet, dass** in der Einlassöffnung des Zylinders (11) ein Verbindungsrohr (47) sitzt, auf das die Auslassöffnung (2) bzw. die Auslassöffnungen des Behälters (1) gesteckt ist bzw.sind.

10. Vorrichtung nach einem der vorangehenden Ansprüche,
**dadurch gekennzeichnet, dass** das Rückschlagventil (40) als Kugelventil ausgeführt ist.

11. Vorrichtung nach Anspruch 10,
**dadurch gekennzeichnet, dass** am Verbindungsrohr (47) ein Kugelsitz (50) für die Kugel (41) des Kugelventils (40) und eine Überbrückung (51) vorgesehen ist.

12. Vorrichtung nach Anspruch 11,
**dadurch gekennzeichnet, dass** im Boden (39) des Behälters (1) in einer Öffnung ein oberer Ventilsitz (42) und ein unterer Ventilsitz (43) für die Kugel (41) des Kugelventils (40) vorgesehen sind.

13. Vorrichtung nach einem der vorangehenden Ansprüche,
**dadurch gekennzeichnet, dass** die Zylinder (11) einzeln zwischen auf einer Leiste (3) angeordneten Zapfen (4) steckbar und entfernbar sind.

14. Vorrichtung nach Anspruch 13,
**dadurch gekennzeichnet, dass** an den Zylindern (11) Aussparungen (25) für die Zapfen (4) vorgesehen sind.

15. Vorrichtung nach einem der vorangehenden Ansprüche,
**dadurch gekennzeichnet, dass** an den aus den Zylindern (11) ragenden Enden der Kolben (21) ein tellerförmiger Rand (58) angebracht ist, der in korrespondierende Ausnehmungen (19) mit einer Hinterschneidung (20) des Schlittens (18) einsteckbar ist.

16. Vorrichtung nach Anspruch 13, 14 oder 15
**dadurch gekennzeichnet, dass** an der Leiste (3) eine Heizvorrichtung (17) zum Erwärmen der in den Zylindern (11) befindlichen Füllmasse vorgesehen ist.

17. Vorrichtung nach Anspruch 16,
**dadurch gekennzeichnet, dass** für die Heizvorrichtung eine Heizfolie (17) vorgesehen ist.

18. Vorrichtung nach einem der vorangehenden Ansprüche,
**dadurch gekennzeichnet, dass** der Tisch (15) zur Aufnahme der Hohlkörper (13) in Längsrichtung verschiebbar ist, um jeweils eine Reihe von zu füllenden Hohlkörpern (13) unter den Spritzdüsen (12) zu positionieren.

19. Vorrichtung nach Anspruch 18,
**dadurch gekennzeichnet, dass** der Vortrieb des Tisches (15) mit der Antriebswelle (24) oder der Umlenkwelle (26) gekoppelt ist.

20. Vorrichtung nach einem der vorangehenden Ansprüche,
**dadurch gekennzeichnet, dass** der Tisch (15) zur Aufnahme der Hohlkörper (13) in der Höhe verstellbar ist.

21. Vorrichtung nach einem der Ansprüche 2 bis 20,
**dadurch gekennzeichnet, dass** an einer der beiden Antriebsrollen (7) ein Hebel (5) mit einem Handgriff (7) und einer Ausklinkvorrichtung befestigt ist.

22. Vorrichtung nach Anspruch 21,
**dadurch gekennzeichnet, dass** die Antriebswelle (24) in einem Längsloch (38) des Hebels (5) sitzt, dass am Hebel (5) ein Mitnehmerzapfen (34) und eine Führungsrolle (35), am Gehäuse (16) ein Führungsteil (37) und in der Antriebsrolle (7) eine Nut (36) zur Aufnahme des Mitnehmerzapfens (34) vorgesehen sind, dass der Hebel (5) in der Grundstellung senkrecht steht, so dass der Mitnehmerzapfen (34) infolge der Schwerkraft in der Nut (36) der Antriebsrolle (7) liegt, um eine drehfeste Verbindung zwischen dem Hebel (5) und der Antriebsrolle (7) zu bewirken, dass in der Endstellung des Hebels (5) die Führungsrolle (35) des Hebels (5) am Führungsteil (37) des Gehäuses (16) aufgleitet, so dass der Hebel (5) angehoben und der Mitnehmerzapfen (34) aus der Nut (36) gehoben wird, um den Hebel (5) auszuklinken.

23. Vorrichtung nach Anspruch 22,
**dadurch gekennzeichnet, dass** an einer Antriebsrolle (7) oder an einer Umlenkrolle (8) das eine Ende und am Gehäuse (16) das andere Ende einer Rückzugsfeder (28) zum Zurückdrehen der Antriebswelle (24) oder der Umlenkwelle (26) in die Ausgangslage bei ausgeklinktem Hebel (5) befestigt ist.

24. Vorrichtung nach Anspruch 23,
**dadurch gekennzeichnet, dass** die Rückzugsfeder mit einem Dämpfungsglied kombiniert ist.

25. Vorrichtung nach Anspruch 24,
**dadurch gekennzeichnet, dass** eine Gasdruckfeder (28) vorgesehen ist.

26. Vorrichtung nach einem der Ansprüche 21 bis 25,
**dadurch gekennzeichnet, dass** auf der dem Hebel (5) gegenüberliegenden Antriebsrolle (7) ein erster Anschlagstift (31) angeordnet ist, für den ein einstellbarer Anschlag (30) am Gehäuse (16) angeordnet ist.

27. Vorrichtung nach Anspruch 26,
**dadurch gekennzeichnet, dass** der einstellbare Anschlag (30) mittels einer Stellschraube (29) einstellbar ist.

28. Vorrichtung nach Anspruch 26 oder 27,
**dadurch gekennzeichnet, dass** zur definierten Einstellung des einstellbaren Anschlags (30) eine Skala (33) am Gehäuse (16) vorgesehen ist.

29. Vorrichtung nach Anspruch 26, 27 oder 28,
**dadurch gekennzeichnet, dass** an der dem Hebel (5) gegenüberliegenden Antriebsrolle (24) in Rücklaufrichtung gesehen ein ein- und ausrückbarer zweiter Anschlagstift (32) vor dem ersten Anschlagstift (31) vorgesehen ist.

30. Vorrichtung nach einem der vorangehenden Ansprüche,
**dadurch gekennzeichnet, dass** die zu befüllenden Hohlkörper (13) Reihen und Spalten bildend auf einer Palette oder einem Blister (14) angeordnet sind.

31. Vorrichtung nach einem der vorangehende Ansprüche,
**dadurch gekennzeichnet, dass** zwischen den Auslassöffnungen (2) des Behälters (1) Trennwände vorgesehen sind.

32. Vorrichtung nach einem der vorangehenden Ansprüche,
**dadurch gekennzeichnet, dass** eine Hubvorrichtung für den Tisch (15) zum Anheben und Absenken während des Füllvorganges vorgesehen ist.

33. Vorrichtung nach Anspruch 32,
**dadurch gekennzeichnet, dass** die Hubvorrichtung mit der Antriebsvorrichtung des Schlittens (18) gekoppelt ist.

34. Vorrichtung nach einem der vorangehenden Ansprüche,
**dadurch gekennzeichnet, dass** die Hohlkörper (13) eßbar sind.

35. Vorrichtung nach Anspruch 34,
**dadurch gekennzeichnet, dass** die Hohlkörper (13) Pralinen oder ähnliche Süßwaren sind.

36. Vorrichtung nach einem der vorangehenden Ansprüche,
**dadurch gekennzeichnet, dass** die Füllmasse eßbar ist.

## Claims

1. An apparatus for filling hollow products (13) with a filling material, comprising a housing (16) with a container (1) for receiving the filling material, on the bottom (39) of which several outlet ports (2) are arranged in a row, at least one cylinder (11) with a piston (21), an inlet port (23) and an outlet port, wherein a pressure-sensitive outlet valve (52) is provided in the cylinder (11) to open and close the outlet port of the cylinder (11), wherein an injection nozzle (12) is disposed at the outlet port of the cylinder (11), wherein the end of the piston (21) protruding from the cylinder (11) is fixed to a slide (18) moveable by means of a drive mechanism in the direction of the longitudinal axis of the cylinders (11), and wherein a table (15) for receiving the hollow products (13) is provided beneath the injection nozzles (12),
**characterised in that** the container (1) can be removed from the housing (16),
**in that** a pressure-sensitive check valve (40) for opening and closing the output ports (2), which is automatically closed when the container (19) is removed, is disposed at each outlet port (2) of the container (1)
and **in that** the inlet port (23) of the cylinder (11) is connected to the outlet of the check valve (40), where the check valve (40) is open when the container (1) is placed on the housing (16) and can be closed by forcing the piston (21) into the cylinder (11).

2. An apparatus according to Claim 1,
**characterised in that** a drive shaft (24) and a deflection shaft (26) are rotatably mounted in the housing (16) parallel to the slide (18),
**in that** a drive roller (7) is seated on each of the ends of the drive shaft (24),
**in that** a deflection roller (8) is seated on each of the ends of the deflection shaft (26),
**in that** on each side of the housing (16) a wire rope (10) or a belt is passed over the drive roller (7) and the deflection (8),
**in that** the right-hand end (9) of the slide (18) is fixed to the wire rope (10) or belt on the right-hand side and the left-hand end (8) of the slide (18) is fixed to the rope (10) or belt on the left hand side of the housing (16),
and **in that** a drive mechanism is provided to drive the drive shaft (24).

3. An apparatus according to Claim 1 or 2,
**characterised in that** the injection nozzle (12) is rotatably fixed by means of a bushing (48) fitted on the cylinder (11).

4. An apparatus according to Claim 3,
**characterised in that** the bushing (48) is mounted on two prestressed O-rings (53) in order to produce friction and so that it is possible to release and adjust them without a tool.

5. An apparatus according to Claim 1, 2, 3 or 4,
**characterised in that** the cylinder end is closed with a removable cap (22).

6. An apparatus according to Claim 5,
**characterised in that** the cap (22) comprises an external thread which is screwed with an internal thread (49) of the cylinder (11).

7. An apparatus according to one of the preceding Claims,
**characterised in that** the clear width of the cylinder (11) decreases rearwards from the end closed with the cap (22) so as to avoid undercuts.

8. An apparatus according to one of the precharacterising Claims,
**characterised in that** the outlet valve (52) is manufactured as an elastic valve (54) from an elastic material.

9. An apparatus according to one of the preceding Claims,
**characterised in that** a connecting tube (47), on which the outlet port (2) or the outlet ports of the container (1) is or are placed, is seated in the inlet port of the cylinder (11).

10. An apparatus according to one of the preceding Claims,
**characterised in that** the check valve (40) is designed as a ball valve.

11. An apparatus according to Claim 10,
**characterised in that** a ball seat (50) for the ball (41) of the ball valve (40) and a bridging device (51) are provided on the connecting tube (47).

12. An apparatus according to Claim 11,
**characterised in that** an upper valve seat (42) and a lower valve seat (43) for the ball (41) of the ball valve (40) are provided in the bottom (39) of the container (1) in an opening.

13. An apparatus according to one of the preceding Claims,
**characterised in that** the cylinders (11) can be placed individually between pegs (4) disposed on a guide rail (3) and can be removed.

14. An apparatus according to Claim 13,
**characterised in that** recesses (25) for the pegs (4) are provided on the cylinders (11).

15. An apparatus according to one of the preceding Claims,
**characterised in that** a plate-shaped edge (58), which can be inserted into corresponding recesses (19) with an undercut (20) of the slide (18), is mounted at the ends of the pistons (21) protruding from the cylinders (11).

16. An apparatus according to Claim 13, 14 or 15,
**characterised in that** a heating device (17) for heating the filling material located in the cylinders (11) is provided on the guide rail (3).

17. An apparatus according to Claim 16,
**characterised in that** a heating foil (17) is provided for the heating device.

18. An apparatus according to one of the preceding Claims,
**characterised in that** the table (15) for receiving the hollow products (13) is displaceable in the longitudinal direction in order to position a row of hollow products (13) to be filled under the injection nozzles (12).

19. An apparatus according to Claim 18,
**characterised in that** the propulsion of the table (15) is coupled with the drive shaft (24) or the deflection shaft (26).

20. An apparatus according to one of the preceding Claims,
**characterised in that** the height of the table (15) for receiving the hollow products is adjustable.

21. An apparatus according to one of Claims 2 to 20,
**characterised in that** a lever (5) with a grip (7) and a release device is fixed to one of the two drive rollers (7).

22. An apparatus according to Claim 21,
**characterised in that** the drive shaft (24) is seated in a slot (38) in the lever (5),
**in that** an operating pin (34) and a guide roller (35) are provided on the lever (5), a guide part (37) is provided on the housing (16) and a groove (36) for receiving the operating pin (34) is provided in the drive roll (7),
**in that** the lever (5) is perpendicular in the normal position so that the operating pin (34) lies in the groove of the drive roller (7) as a result of the force of gravity in order to produce a torque-proof connection between the lever (5) and the drive roller (7),
**in that** in the final position of the lever (5) the guide roller (35) of the lever (5) slides on the guide part (37) of the housing (16) so that the lever (5) is raised and the operating pin (34) is lifted out of the groove (36) in order to release the lever (5).

23. An apparatus according to Claim 22,
**characterised in that** the one end of a return spring (28) is fixed to a drive roller (7) or to a deflection roller (8) and the other end of a return spring (28) is fixed to the housing (16) to turn the drive shaft (24) or the deflection shaft (26) back into the starting position with the lever (5) released.

24. An apparatus according to Claim 23,
**characterised in that** the return spring is combined with a pad.

25. An apparatus according to Claim 24,
**characterised in that** a gas spring (28) is provided.

26. An apparatus according to one of Claims 21 to 25,
**characterised in that** a first stop pin (31), for which an adjustable stop (30) is provided on the housing (16), is disposed on the drive roller (7) located opposite the lever (5).

27. An apparatus according to Claim 26,
**characterised in that** the adjustable stop (30) can be adjusted by means of an adjusting screw (29).

28. An apparatus according to Claim 26 or 27,
**characterised in that** a scale (33) is provided on the housing (16) for the defined adjustment of the adjustable stop (30).

29. An apparatus according to Claim 26, 27 or 28,
**characterised in that** an engageable and disengageable second stop pin (32) is provided in front of the first stop pin (31) on the drive roller (24) located opposite the lever (5) seen in the return direction.

30. An apparatus according to one of the preceding Claims,
**characterised in that** the hollow products (13) to be filled are disposed on a palette or a blister (14) and form rows and columns.

31. An apparatus according to one of the preceding Claims,
**characterised in that** partitions are provided between the outlet ports (2) of the container (1).

32. An apparatus according to one of the preceding Claims,
**characterised in that** a lifting device for the table (15) is provided for raising and lowering during the filling operation.

33. An apparatus according to Claim 32,
**characterised in that** the lifting device is coupled with the drive mechanism for the slide (18).

34. An apparatus according to one of the preceding Claims,
**characterised in that** the hollow products (13) are edible.

35. An apparatus according to Claim 34,
**characterised in that** the hollow products (13) are chocolates or similar confectionery.

36. An apparatus according to one of the preceding Claims,
**characterised in that** the filling material is edible.

## Revendications

1. Dispositif de remplissage de corps creux (13) avec une masse de remplissage, comprenant un boîtier (16) avec un récipient (1) pour recevoir la masse de remplissage, dont le fond (39) comporte plusieurs ouvertures de sortie (2) disposées en ligne, au moins un vérin (11) avec un piston (21), une ouverture d'entrée (23) et une ouverture de sortie, le vérin (11) comportant une soupape de sortie (52) s'ouvrant par pression pour ouvrir et fermer l'ouverture de sortie du vérin (11), avec une buse d'injection (12) sur l'ouverture de sortie du vérin (11), dans lequel l'extrémité du piston (21) dépassant du vérin (11) est fixée à un chariot (18) déplaçable au moyen d'un dispositif d'entraînement en direction de l'axe longitudinal du vérin (11), et avec une table (15) prévue sous les buses d'injection (12) pour recevoir les corps creux (13),
**caractérisé en ce que**
le récipient (1) peut être retiré du boîtier (16), un clapet anti-retour (40) se fermant par pression et disposé sur chaque ouverture de sortie (2) du récipient pour ouvrir et fermer les ouvertures de sortie (2) est automatiquement fermé lorsque le récipient (19) est retiré, et l'ouverture d'entrée (23) du vérin (11) est reliée à la sortie du clapet anti-retour (40), le clapet anti-retour (40) étant ouvert lorsque le récipient (1) est placé sur le boîtier (16) et peut être fermé par l'enfoncement du piston (21) dans le vérin (11).

2. Dispositif selon la revendication 1,
**caractérisé en ce que**
parallèlement au chariot (18), un arbre d'entraînement (24) et un arbre de renvoi (26) sont logés en rotation dans le boîtier (16), un galet d'entraînement (7) est placé respectivement sur les extrémités de l'arbre d'entraînement (24), un galet de renvoi (8) est placé sur chacune des extrémités de l'arbre de renvoi (26), un câble (10), ou une courroie, est guidé sur le galet d'entraînement (7) et le galet de renvoi (8) de chaque côté du boîtier (16), l'extrémité droite (9) du chariot (18) est fixée au câble (10) ou à la courroie du côté droit alors que l'extrémité gauche (8) du chariot (18) est fixée au câble (10) ou à la courroie du côté gauche du boîtier (16), avec un dispositif d'entraînement pour entraîner l'arbre d'entraînement (24).

3. Dispositif selon la revendication 1 ou 2,
**caractérisé en ce que**
la buse d'injection (12) est fixée en rotation au moyen d'une douille (48) emboîtée sur le vérin (11).

4. Dispositif selon la revendication 3,
**caractérisé en ce que**
la douille (48) est logée sur deux joints toriques (53) précontraints pour générer une friction et pouvoir être desserrée et réglée sans outil.

5. Dispositif selon la revendication 1, 2, 3 ou 4,
**caractérisé en ce que**
l'extrémité du vérin est fermée par un capuchon (22) amovible.

6. Dispositif selon la revendication 5,
**caractérisé en ce que**
le capuchon (22) présente un filet mâle qui est vissé dans un filet femelle (49) du vérin (11).

7. Dispositif selon l'une quelconque des revendications précédentes,
**caractérisé en ce que**
la largeur intérieure du vérin (11) diminue depuis l'extrémité fermée par le capuchon (22) vers l'arrière pour éviter des contre-dépouilles.

8. Dispositif selon l'une quelconque des revendications précédentes,
**caractérisé en ce que**
la soupape de sortie (52) est une soupape souple (54) en matériau élastique.

9. Dispositif selon l'une quelconque des revendications précédentes,
**caractérisé en ce que**
l'ouverture d'entrée du vérin (11) comporte un tube le liaison (47) sur lequel est ou sont emboîtée(s) l'ouverture de sortie (2) ou les ouvertures de sortie du récipient (1).

10. Dispositif selon l'une quelconque des revendications précédentes,
**caractérisé en ce que**
le clapet anti-retour (40) est une soupape à bille.

11. Dispositif selon la revendication 10,
**caractérisé en ce qu'**
un siège de bille (50) pour la bille (41) de la soupape à bille (40) et un pontage (51) sont prévus sur le tube de liaison (47).

12. Dispositif selon la revendication 11,
**caractérisé en ce qu'**
un siège de soupape supérieur (42) et un siège de soupape inférieur (43) sont prévus pour la bille (41) de la soupape à bille (40) au niveau d'une ouverture sur le fond (39) du récipient (1).

13. Dispositif selon l'une quelconque des revendications précédentes,
**caractérisé en ce que**
les vérins (11) peuvent être emboîtés et retirés individuellement entre des pivots (4) disposés sur un rail (3).

14. Dispositif selon la revendication 13,
**caractérisé en ce que**
les vérins (11) comportent des évidements (25) pour les pivots (4).

15. Dispositif selon l'une quelconque des revendications précédentes,
**caractérisé en ce que**
les extrémités des pistons (21) dépassant des vérins (11) comportent un bord (58) en forme de plateau qui peut être emboîté dans des cavités (19) correspondantes avec une contre-dépouille (20) du chariot (18).

16. Dispositif selon la revendication 13, 14 ou 15,
**caractérisé en ce que**
le rail (3)porte un dispositif de chauffage (17) pour chauffer la masse de remplissage dans les vérins (11).

17. Dispositif selon la revendication 16,
**caractérisé en ce qu'**
une feuille chauffante (17) est prévue pour le dispositif de chauffage.

18. Dispositif selon l'une quelconque des revendications précédentes,
**caractérisé en ce que**
la table (15) pour recevoir les corps creux (13) est déplaçable longitudinalement pour positionner respectivement une ligne de corps creux (13) sous les buses d'injection (12).

19. Dispositif selon la revendication 18,
**caractérisé en ce que**
l'avance de la table (15) est couplée avec l'arbre d'entraînement (24) ou l'arbre de renvoi (26).

20. Dispositif selon l'une quelconque des revendications précédentes,
**caractérisé en ce que**
la table (15) pour recevoir les corps creux (13) est réglable en hauteur.

21. Dispositif selon l'une quelconque des revendications 2 à 20,
**caractérisé en ce qu'**
un levier (5) comprenant une poignée (7) et un dispositif d'enclenchement est fixé sur l'un des deux galets d'entraînement (7).

22. Dispositif selon la revendication 21,
**caractérisé en ce que**
l'arbre d'entraînement (24) se situe dans un trou oblong (38) du levier (5), un axe d'entraînement (34) et un galet de guidage (35) sont prévus sur le levier (5) et une rainure (36) est prévue pour recevoir l'axe d'entraînement (34) dans le galet d'entraînement (7), le levier (5) se trouve à la verticale dans la position initiale de sorte que l'axe d'entraînement (34) se trouve grâce à la force de gravité dans la rainure (36) du galet d'entraînement (7) pour obtenir une liaison solidaire en rotation entre le levier (5) et le galet d'entraînement (7), et le galet de guidage (35) du levier (5) glisse sur la partie de guidage (37) du boîtier (16) dans la position finale du levier (5) de manière à soulever le levier (5) et à soulever l'axe d'entraînement (34) de la rainure (36) pour enclencher le levier (5).

23. Dispositif selon la revendication 22,
**caractérisé en ce que**
pour ramener l'arbre d'entraînement (24) ou l'arbre de renvoi (26) dans la position initiale lorsque le levier (5) est enclenché, une extrémité d'un ressort de rappel (28) est fixée au niveau d'un galet d'entraînement (7) ou d'un galet de renvoi (8), l'autre extrémité étant fixée au boîtier (16).

24. Dispositif selon la revendication 23,
**caractérisé en ce que**
le ressort de rappel est combiné avec un organe d'amortissement.

25. Dispositif selon la revendication 24,
**caractérisé par**
un ressort à pression de gaz (28).

26. Dispositif selon l'une quelconque des revendications 21 à 25,
**caractérisé en ce qu'**
une première tige de butée (31) pour laquelle une butée (30) réglable est disposée sur le boîtier (16) est disposée sur le galet d'entraînement (7) situé en face du levier (5).

27. Dispositif selon la revendication 26,
**caractérisé en ce qu'**
on peut régler la butée (30) réglable au moyen d'une vis de réglage (29).

28. Dispositif selon la revendication 26 ou 27,
**caractérisé en ce qu'**
une graduation (33) prévue sur le boîtier (16) permet de régler la butée réglable (30).

29. Dispositif selon la revendication 26, 27 ou 28,
**caractérisé en ce que**
le galet d'entraînement (24) situé en face du levier (5), comporte dans la direction de retour, une deuxième tige de butée (32) embrayable et débrayable avant la première butée (31).

30. Dispositif selon l'une quelconque des revendications précédentes,
**caractérisé en ce que**
les corps creux (13) à remplir sont disposés sur une palette ou un blister (14) et former des lignes et des colonnes.

31. Dispositif selon l'une quelconque des revendications précédentes,
**caractérisé en ce que**
des cloisons sont prévues entre les ouvertures de sortie (2) du récipient (1).

32. Dispositif selon l'une quelconque des revendications précédentes,
**caractérisé en ce qu'**
un dispositif de levage pour la table (15) est prévu pour le levage et la descente pendant le processus de remplissage.

33. Dispositif selon la revendication 32,
**caractérisé en ce que**
le dispositif de levage est couplé avec le dispositif d'entraînement du chariot (18).

34. Dispositif selon l'une quelconque des revendications précédentes,
**caractérisé en ce que**
les corps creux (13) sont comestibles.

35. Dispositif selon la revendication 34,
**caractérisé en ce que**
les corps creux (13) sont des chocolats ou des sucreries similaires.

36. Dispositif selon l'une quelconque des revendications précédentes,
**caractérisé en ce que**
la masse de remplissage est comestible.
